# EUROPEAN PATENT APPLICATION

(11) **EP 4 844 438 A1**
(43) Date of publication of application: **25.11.2026**
(21) Application number: 25178170.4
(22) Date of filing: 22.05.2025
(51) Int. Cl.: G01S 7/41, G01S 13/86, G01S 13/931, G06N 3/0455

(54) **METHOD AND SYSTEM FOR AL BASED SENSOR DATA FUSION WITH AUTO-LEARNING OF IMAGE TRANSFORMATION VIA MULTI ENCODER-DECODER ARCHITECTURE**

(30) Priority: 21.05.2025 EP 25465528
(71) Applicant: Elektrobit Automotive GmbH, 91058 Erlangen (DE)
(72) Inventor: Chandrasekaran, Kavin, 91058 Erlangen (DE); Grigorescu, Sorin Mihai, 500365 Brasov (RO); Eßbach, Anja, 91058 Erlangen (DE); Nourbakhsh, Seyed Hami, 91058 Erlangen (DE)
(74) Representative: Aumovio Corporation

(57) **Abstract**

Embodiments of the present disclosure relate to a method and system for sensor fusion. A computer program, a computer-readable data carrier and an apparatus are also disclosed. The method comprises: processing camera images using a first machine learning model to obtain a camera Bird's Eye View, BEV; processing radar data using a second machine learning model to obtain a radar BEV; and fusing the camera BEV with the radar BEV to obtain a first BEV.

## Description

The present disclosure pertains to the field of sensor fusion in general, and in particular to methods and systems for sensor fusion in automotive applications, focusing on the integration of camera data and high-definition (HD) imaging radar data.

Conventional camera systems provide high-resolution visual data but struggle in poor lighting and challenging weather conditions. In contrast, next-generation HD imaging radar offers greater reliability in adverse conditions and improved angular resolution, though it has limited ability to recognize visual features. Due to its high cost, lidar is not considered within the scope of this research. Given the strengths and weaknesses of each sensor, designing an effective sensor fusion algorithm for automotive applications requires careful evaluation.

Camera data is typically recorded in front-view (or perspective view), while radar data can take various forms, such as Analog-to-Digital Converter (ADC) data, Range-Doppler (RD) spectrum, Range-Azimuth (RA) view, or point cloud representation. Numerous approaches exist to transform radar data to perspective view, such as projecting point cloud data onto camera images. However, these methods are costly, consume significant memory, and are less accurate. Range-Azimuth spectrum or Range-Doppler information are also commonly used with camera data for fusion in many works.

Another alternative is to convert camera images to Bird's Eye View (BEV) because radar data is typically represented in BEV. The drawback of this approach is the potential loss of information, especially at wider angles and far distances, during the conversion of camera data to BEV. Despite the existence of numerous fusion frameworks, very few have successfully fused camera and HD imaging radar data, even with publicly available datasets. Most conventional methods focus on mathematically transforming camera images to BEV.

Object detection and semantic segmentation using camera and HD imaging radar data have been less explored due to the lack of annotated datasets and the complexity of the data itself. The main problem is the computational complexity, which includes GPU memory consumption during neural network training, inference time, model size, and so on. Additionally, the cost and effort required for data pre-processing are often ignored.

The present disclosure seeks to address these problems by proposing a novel approach that leverages machine learning. This approach allows the machine learning model to learn the image transformation process, thereby eliminating the need for manual transformation of camera images and reducing computational complexity. The disclosure aims to provide a more efficient and reliable solution for sensor fusion, ultimately enhancing object detection and semantic segmentation in automotive applications. This solution is covered by the subject-matter of the appended independent claims. The appended dependent claims address optional embodiments of the present disclosure.

According to an aspect of the present disclosure, there is provided a method for sensor fusion, comprising: processing camera images using a first machine learning model to obtain a camera Bird's Eye View, BEV; processing radar data using a second machine learning model to obtain a radar BEV; and fusing the camera BEV with the radar BEV to obtain a first BEV.

Learning the Bird's Eye View (BEV) from camera images using a machine learning model, for instance a variational encoder-decoder architecture, offers significant advantages over traditional methods. This approach reduces computational complexity by eliminating the need for manual mathematical transformations and extensive calibration. The neural network learns the transformation during training, which simplifies the process and minimizes the risk of errors.

For instance, the variational encoder-decoder architecture improves accuracy by capturing the underlying probability distribution of the data, resulting in precise BEV transformations even at wider angles and longer distances. This method also provides flexibility in determining fusion points, allowing for fusion at the feature level or at a later stage without manual calculations, enhancing the system's adaptability to different scenarios.

Additionally, the machine learning model architecture (e.g., variational encoder-decoder) may be tuned to effectively handle occlusions and low visibility conditions to generate consistent and accurate BEV representations. This capability ensures robust and realistic BEV representations, making it an efficient tool for sensor fusion in automotive applications.

The method for sensor fusion disclosed herein may be applied particularly in automotive applications. The method transforms camera images from their original perspective view to a top-down view, thereby providing a comprehensive and unobstructed representation of the environment. This transformation enhances the accuracy and reliability of the sensor fusion process by aligning the spatial information from the camera with the radar data. Processing radar data using a second machine learning model to obtain a radar BEV ensures that the radar data is also transformed into a compatible format. The fusion of the camera BEV with the radar BEV to obtain a first BEV integrates the data from both sensors, providing a unified and accurate representation of the environment.

In embodiments, processing the radar data to obtain a radar BEV may comprise generating point cloud data from raw radar data; processing the point cloud data to obtain a Range-Azimuth (RA) view; and transforming the RA view to BEV using the second machine learning model. The technical effect of generating point cloud data from raw radar data is the extraction of spatial information from the radar signals, which provides a detailed and accurate representation of the environment. Processing the raw range-Doppler (R+iD) data to obtain an RA view structures the radar data into a two-dimensional format, making it easier to integrate with the camera data. Transforming the RA view to camera-like BEV using the second machine learning model ensures that the radar data is aligned with the camera BEV, enhancing the accuracy and reliability of the sensor fusion process.

In embodiments, generating the point cloud data from raw radar data may comprise processing complex range-Doppler (R+iD) data to obtain the point cloud data, wherein the complex range-Doppler (R+iD) may be obtained from the raw radar data, wherein the complex range-Doppler data may be generated from the raw radar data by applying a Fourier transform to the raw radar data (e.g., to the received radar signals), which separates the frequency components and allows for the extraction of range and Doppler information.

In embodiments, processing the complex range-Doppler (R+iD) data to obtain the point cloud data comprises projecting the resulting point cloud data onto 2D camera images as binary masks, thereby ensuring that data from both camera and radar corresponds to the same spatial location, and processing the raw range-Doppler data to obtain the RA view. The technical effect of projecting the point cloud data onto 2D camera images as binary masks is the alignment of the spatial information from both sensors, which facilitates accurate sensor fusion. Processing the projected range-Doppler data to obtain the RA view ensures that the radar data is structured in a format compatible with the camera data, enhancing the accuracy and reliability of the sensor fusion process.

In embodiments, processing the point cloud data to obtain the RA view may comprise processing the complex range-doppler (R+iD) to obtain the RA view, wherein processing the complex range-doppler to obtain the RA view may comprise projecting the point cloud data onto 2D camera images as binary masks.

In embodiments, the fusion of the camera BEV with the radar BEV to obtain the first BEV may be performed by concatenation. This enables a seamless integration of the data from both sensors, ensuring that the fused BEV retains the essential features from both the camera and radar data. This method enhances the accuracy and reliability of the sensor fusion process by providing a comprehensive and unified representation of the environment.

In embodiments, the method for sensor fusion may further comprise performing object detection or semantic segmentation on the first BEV based on available ground truth data. This enables the identification and classification of objects within the environment, providing valuable information for applications such as autonomous driving and robotics. For instance, the autonomous system or ego-vehicle may use said detected objects for collision avoidance and/or trajectory planning. Said detected objects may be used the sensor fusion method by enabling it to perform complex computer vision tasks.

In embodiments, the method for sensor fusion may further comprise at least one of: processing the camera images using a third machine learning model to obtain a camera perspective view, processing the radar data to generate a radar perspective view, and fusing the camera perspective view with the radar perspective view to obtain a fused perspective view. The technical effect of processing the camera images using a third machine learning model, such as an encoder-decoder architecture, is the transformation of the camera images into a format suitable for fusion with radar data. Processing the radar data to generate a radar perspective view ensures that the radar data is transformed into a compatible format. Fusing the camera perspective view with the radar perspective view integrates the spatial information from both sensors, providing a unified and accurate representation of the environment.

In embodiments, the method for sensor fusion disclosed herein may further comprise processing the fused perspective view using a fourth machine learning model, such as a variational encoder-decoder architecture, to obtain a second BEV, and fusing the first BEV with the second BEV to obtain a final BEV. By transforming the fused perspective data into a BEV format, an unobstructed view is obtained that enhances object detection and facilitates the further fusion steps. Fusing the first BEV with the second BEV integrates the data from both the initial BEV and the transformed perspective view, providing a comprehensive and accurate representation of the environment.

In embodiments, the method for sensor fusion may further comprise performing object detection or semantic segmentation on the final BEV. This enables the identification and classification of objects within the environment, providing valuable information for applications such as autonomous driving and robotics. This step enhances the functionality and utility of the sensor fusion method by enabling it to perform complex computer vision tasks.

In embodiments, the camera images are at least one of front-view, back-view, or side-view camera images. The technical effect of using different camera views is the enhancement of the accuracy and reliability of the sensor fusion process by providing multiple perspectives of the environment. This flexibility ensures that the sensor fusion method can be adapted to different scenarios and requirements, providing a comprehensive solution for various applications.

According to another aspect of the present disclosure, there is provided a computer program comprising instructions which, when the computer program is executed by a computer, cause the computer to carry out any one of the methods disclosed herein.

According to a further aspect of the disclosure, there is provided a computer-readable data carrier having stored thereon the computer program disclosed herein.

According to a further aspect of the disclosure, there is provided an apparatus comprising: one or more interfaces for communication; a memory; and a data processing circuit configured to carry out any one of the methods disclosed herein.

Examples will now be further described with reference to the figures in which:
Fig. 1 shows a flow diagram illustrating a computer-implemented method 100 for sensor fusion.
Fig. 2 shows a flow diagram illustrating additional steps of the computer-implemented method 100 for sensor fusion.
Fig. 3 shows a schematic illustrating an embodiment of the system used for sensor fusion.
Fig. 4 schematically illustrates a block diagram of an embodiment of an apparatus to execute the methods described herein.

### Detailed Description

The proposed sensor fusion solution extends the architecture of a variational autoencoder-decoder for fusion in Bird's Eye View (BEV). Transforming raw camera sensor data to a top-down view is particularly challenging due to its high processing cost and the potential for information loss, especially at wider angles and longer distances when calibration parameters are not precise. The proposed sensor fusion solution eliminates the need for manual transformation of camera images by allowing the neural network to learn this transformation during training. This significantly reduces the processing cost and minimizes the risk of information loss. Additionally, finding the right fusion point is a tedious task in traditional methods. Said solution offers flexibility by enabling fusion at the feature level or at a later stage without involving manual mathematical operations. This flexibility not only simplifies the fusion process but also reduces computational complexity.

The sensor fusion method according to the disclosure involves fusing the camera data with radar data in a novel fashion. The fusion framework includes three main steps: 1. The camera network learns the image transformation from front-view to BEV, ensuring that the camera data is aligned with the radar data in BEV. 2. Another camera network learns the features in front-view, projecting the point cloud data from radar to 2D front-view camera images as binary masks. This projected data is then fed into another autoencoder network that learns the BEV transformation. 3. The results from the above steps are fused for final predictions, enabling subsequent tasks such as object detection or semantic segmentation based on the available ground truth data.

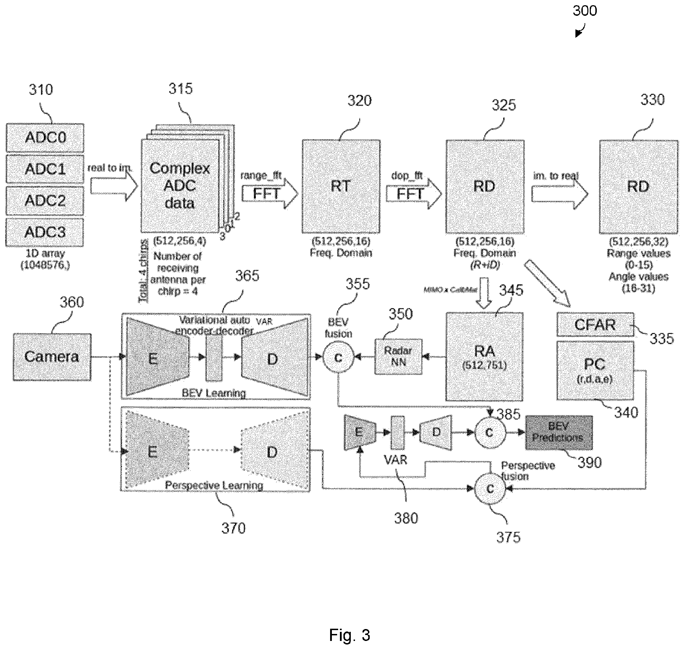

One embodiment of the proposed sensor fusion system is illustrated in Fig. 3 and involves three encoder-decoder architectures and three fusion points, providing a comprehensive and efficient framework for sensor fusion in automotive applications. This approach enhances the accuracy and reliability of the fused data, making it a viable solution for real-time automotive applications. By leveraging machine neural network learning and autoencoder learning strategies, the invention addresses the limitations of prior art solutions and offers a more efficient and reliable method for integrating camera and HD imaging radar data.

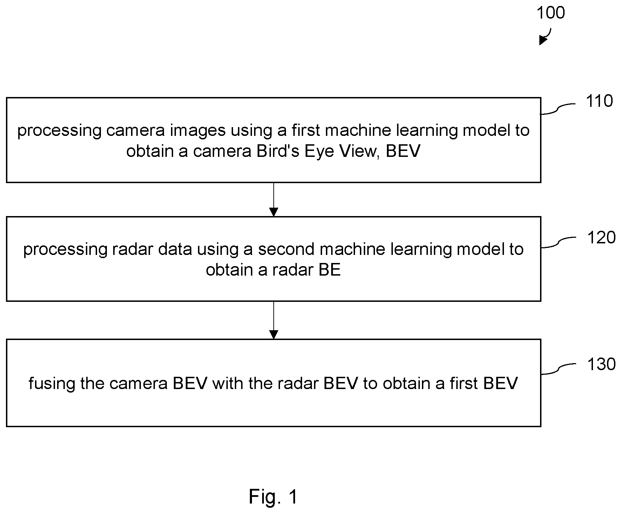

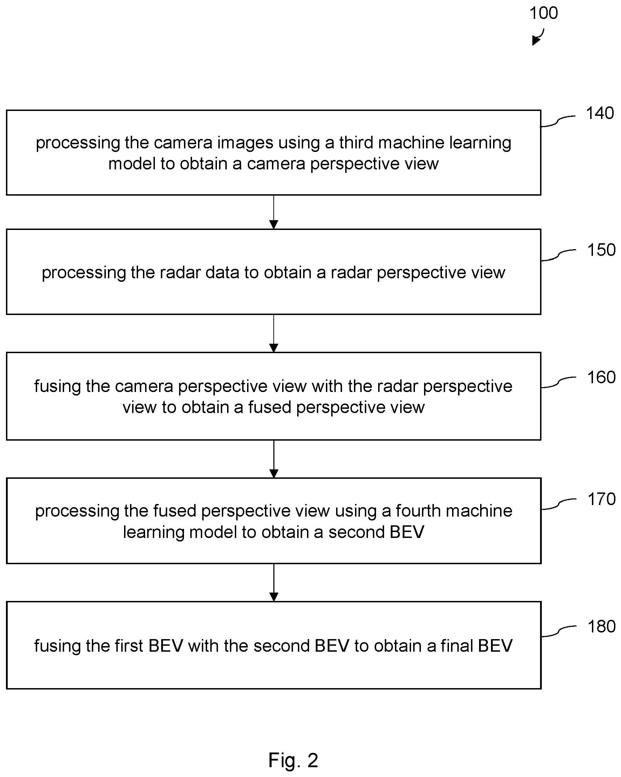

Fig. 1 shows a flow diagram illustrating a computer-implemented method 100 for sensor fusion. Fig. 2 shows a flow diagram illustrating additional steps of the computer-implemented method 100 for sensor fusion.

The method for sensor fusion may be used for at least one of automotive applications, robotics applications, where sensor fusion can enhance situational awareness and target tracking by integrating data from multiple sensors such as radar, infrared, and visual cameras. In medicine, sensor fusion according to the disclosure can improve diagnostic accuracy and patient monitoring by combining data from imaging modalities like MRI, CT scans, and ultrasound. Additionally, telemedicine can benefit from sensor fusion according to the disclosure by integrating data from wearable devices, remote monitoring systems, and imaging tools to provide comprehensive patient assessments. In image processing, sensor fusion as disclosed herein can enhance image quality and feature extraction by combining data from different imaging sensors.

Furthermore, aerospace applications can utilize the sensor fusion as disclosed herein for navigation, obstacle detection, and situational awareness by integrating data from radar, lidar, and cameras. Environmental monitoring can also benefit from sensor fusion by combining data from various sensors to provide accurate and comprehensive assessments of environmental conditions.

Step 110 of method 100 comprises processing camera images using a first machine learning model to obtain a camera Bird's Eye View, BEV.

In embodiments, the first machine learning model may be a variational autoencoder. In embodiments, the camera may be any device capable of capturing visual data, including but not limited to digital cameras, infrared cameras, or stereo cameras. The images may be any form of visual data captured by the camera, such as RGB images, grayscale images, or depth images.

The first machine learning model may be any model capable of processing visual data to obtain a BEV representation. This includes, but is not limited to diffusion models, recurrent neural networks (RNNs), or generative adversarial networks (GANs). The model may also be a pre-trained model, such as VGG-16, Inception, ResNet50, or EfficientNet, which has been fine-tuned for the specific task of image transformation.

In embodiments, the first machine learning model may utilize techniques such as data augmentation, transfer learning, or unsupervised learning to enhance its performance. The model may also employ various image processing techniques, such as edge detection, segmentation, or feature extraction, to improve the accuracy of the BEV representation.

The camera images processed in step 110 may be captured in real-time or retrieved from a stored dataset. The images may be annotated with metadata, such as timestamps, GPS coordinates, or sensor readings, to provide additional context for the machine learning model.

The BEV is a top-down view of the scene, providing a comprehensive perspective that is particularly useful for applications such as autonomous driving, robotics, and surveillance. BEV representations are advantageous because they offer a clear and unobstructed view of the environment, making it easier to detect and track objects, plan paths, and avoid obstacles.

In embodiments, the first machine learning model may map the visual data captured by the camera to a BEV format, which may include information about the positions and shapes of objects, road boundaries, and other relevant features. The BEV representation offers a clear and unobstructed view of the environment, making it easier to detect and track objects, plan paths, and avoid obstacles.

Step 120 of method 100 comprises processing radar data using a second machine learning model to obtain a radar BEV.

In embodiments, the second machine learning model may be any suitable neural network architecture, for instance a radar neural network (NN). The radar NN processes the radar data, which may include Range-Azimuth (RA) or Range-Doppler (RD) representations, to generate a BEV representation. This transformation is useful for integrating radar data with camera data, providing a comprehensive view of the environment.

The radar neural network may be designed to handle the unique characteristics of radar data, such as its sparse and noisy nature. By leveraging deep learning techniques, the radar NN can effectively extract meaningful features from the radar data, enhancing the accuracy and reliability of the BEV representation. This process may involve several stages, including data preprocessing, feature extraction, and transformation, all of which may be optimized to handle the high-dimensional radar data efficiently.

In embodiments, processing the radar data to obtain a radar BEV may comprise generating a Range-Azimuth, RA, view from raw radar data; and transforming the RA view to the (e.g., camera-like) radar BEV using the second machine learning model.

For instance, raw radar data is acquired and processed to generate an RA view. The RA view represents the spatial distribution of radar reflections, providing detailed information about the range and azimuth angles of detected objects. This transformation may be achieved through signal processing components shown in Fig. 3 that convert the raw radar data into a format suitable for further analysis.

Subsequently, the RA view may be transformed into a radar BEV using a second machine learning model, which may be a radar neural network (NN). The radar NN processes the RA view to generate a BEV representation that is analogous to a camera-like perspective. This transformation may involve multiple stages, including feature extraction, data preprocessing, and spatial mapping, all optimized to handle the unique characteristics of radar data. The radar BEV provides a top-down view of the environment, integrating radar data with other sensor inputs to enhance situational awareness and target tracking. The BEV representation offers a comprehensive perspective, facilitating the detection and tracking of objects, path planning, and obstacle avoidance.

Step 130 of method 100 comprises fusing the camera BEV with the radar BEV to obtain a first BEV.

In embodiments, the fusion of the camera BEV with the radar BEV to obtain the first BEV may be performed by concatenation. Concatenation may involve combining the data from the camera BEV and the radar BEV along a specified dimension to create a single, comprehensive BEV representation. This process effectively merges the complementary information provided by the two different sensor modalities. The camera BEV offers detailed visual information about the environment, such as the positions and shapes of objects, road boundaries, and other relevant features. Meanwhile, the radar BEV contributes valuable data regarding the range and azimuth angles of detected objects, which is particularly useful for detecting and tracking objects in various weather and lighting conditions.

By concatenating the camera BEV and the radar BEV, the method leverages the strengths of both sensor types, resulting in a more robust and accurate BEV representation. This fused BEV can enhance situational awareness and target tracking capabilities, making it particularly beneficial for applications such as autonomous driving, robotics, and surveillance.

In embodiments, the method may further comprise performing at least one of object detection, semantic segmentation, and object tracking on the first BEV.

In embodiments, performing as object detection, semantic segmentation, and/or object tracking on the first BEV can be based on or can be performed using available ground truth data to enhance the accuracy and reliability of the results.

For instance, object detection may involve identifying and locating objects within the BEV representation. This process typically uses machine learning models, such as convolutional neural networks (CNNs), to detect objects like vehicles, pedestrians, and obstacles. The model analyzes the BEV to determine the positions and boundaries of these objects, providing crucial information for applications like autonomous driving and robotics.

For instance, semantic segmentation may refer to the process of classifying each pixel in the BEV representation into predefined categories, such as road, sidewalk, vehicle, or pedestrian. This task helps in understanding the scene at a granular level, enabling more precise navigation and decision-making. Semantic segmentation models, such as fully convolutional networks (FCNs) or U-Net architectures, can be employed to achieve this.

For instance, object tracking may involve monitoring the movement of detected objects over time within the BEV representation. This task may be helpful for applications that require continuous awareness of dynamic environments, such as autonomous vehicles and surveillance systems. Object tracking algorithms, such as Kalman filters or deep learning-based trackers, can be used to maintain the trajectories of moving objects, ensuring that their positions are accurately updated in real-time.

By incorporating these tasks into the method, the system can provide a comprehensive understanding of the environment, enhancing situational awareness and decision-making capabilities. The use of ground truth data, which may include accurately labeled examples, helps train and validate the machine learning models, ensuring that they perform reliably in real-world scenarios.

In embodiments, the method disclosed herein may further comprise processing 140 the camera images using a third machine learning model (e.g., an encoder-decoder architecture) to obtain a camera perspective view; processing 150 the radar data to obtain a radar perspective view; and fusing 160 the camera perspective view with the radar perspective view to obtain a fused perspective view.

For instance, camera images may be processed using a third machine learning model, which may be an encoder-decoder architecture. The encoder-decoder model may be designed to transform the raw camera images into a perspective view that mimics the human visual perspective. The encoder part of the model extracts features from the input images, while the decoder reconstructs these features into a perspective view. This process may involve techniques such as convolutional neural networks for feature extraction and up-sampling layers for reconstruction. The resulting camera perspective view provides a detailed visual representation of the environment, capturing the positions, shapes, and appearances of objects.

Simultaneously, radar data may be processed to generate a radar perspective view. This step may involve transforming the raw radar data into a format that resembles the visual perspective provided by the camera. Machine learning models, such as radar neural networks (NNs) or other deep learning architectures, are employed to handle the unique characteristics of radar data, such as its sparse and noisy nature. The model processes the radar data to extract meaningful features and map them into a perspective view. This radar perspective view offers complementary information to the camera perspective view, particularly in terms of range and azimuth angles of detected objects.

Consequently, the method disclosed herein may involve fusing the camera perspective view with the radar perspective view to obtain a fused perspective view. This fusion process combines the strengths of both sensor modalities, integrating visual and radar data to create a comprehensive representation of the environment. Techniques such as concatenation or more advanced fusion methods (e.g., Kalman/particle filters, ML models) can be used to merge the two views. The fused perspective view provides a richer and more accurate depiction of the scene, enhancing situational awareness and target tracking capabilities. This integrated view is particularly useful for applications like autonomous driving, robotics, and surveillance, where a detailed understanding of the environment is crucial.

In embodiments, processing the radar data to generate a radar perspective view may comprise: generating point cloud data from the (e.g., complex raw range-Doppler (RD) data see Fig. 3) radar data (e.g., using a Constant False Alarm Rate (CFAR) a module, see Fig. 3), to obtain the radar perspective view.

Hence, the method may involve transforming the raw radar data into point cloud data. This transformation may be achieved by processing the radar signals to extract spatial information about the environment. The point cloud data represents a collection of points in a three-dimensional space, where each point corresponds to a detected object or surface. This data provides detailed information about the positions and distances of objects relative to the radar sensor.

In embodiments, fusing the camera perspective view with the radar perspective view to obtain the fused perspective view may comprise: projecting the point cloud data onto 2D camera image features (e.g., of the camera perspective view) as binary masks, thereby ensuring that data from the camera and radar corresponds to a same spatial location, wherein the binary mask may highlight or is indicative of the locations in the camera image that correspond to the radar point cloud data points, ensuring that data from both sensors align spatially, wherein said projecting of the point cloud data onto 2D camera image features may comprise: transforming the point cloud data into a camera's coordinate system thereby obtaining transformed points, projecting the transformed points onto a 2D image plane of the camera using the camera's intrinsic parameters, thereby obtaining projected points, and overlaying the projected points as the binary masks to ensure spatial alignment, wherein overlaying the projected points as binary masks to ensure spatial alignment may comprise: creating a binary mask where each pixel corresponds to a specific location in the camera image, and setting the pixels at the projected coordinates to 1 (or True) and all other pixels to 0 (or False), thereby aligning the radar data with the camera data spatially.

Projecting the point cloud data onto the 2D camera image features as binary masks ensures that data from both the camera and radar correspond to the same spatial location, facilitating accurate sensor fusion. For example, the method may begin by transforming the point cloud data into the camera's coordinate system. This transformation involves converting the spatial coordinates of the radar points into the coordinate system used by the camera. The transformed points are then projected onto the 2D image plane of the camera using the camera's intrinsic parameters, such as focal length and optical center. This projection results in a set of projected points that correspond to specific locations in the camera image.

Next, these projected points are overlaid onto the camera image as binary masks. A binary mask may be created where each pixel corresponds to a specific location in the camera image. The pixels at the projected coordinates are set to 1 (or True), indicating the presence of radar data at those locations, while all other pixels are set to 0 (or False). This binary mask highlights the locations in the camera image that correspond to the radar point cloud data points, ensuring spatial alignment between the radar and camera data.

By overlaying the projected points as binary masks, the method ensures that the radar data is accurately aligned with the camera data. This spatial alignment is crucial for effective sensor fusion, as it allows the integrated system to leverage the strengths of both sensor modalities.

In embodiments, the method disclosed herein may further comprise: processing 170 the fused perspective view using a fourth machine learning model (e.g., variational encoder-decoder architecture) to obtain a second BEV; and fusing 180 the first BEV with the second BEV to obtain a final BEV.

In embodiments, the fused perspective view, which combines data from both the camera and radar sensors, may be processed using a fourth machine learning model. This model could be a variational encoder-decoder architecture, which is designed to transform the fused perspective view into a BEV format. The encoder part of the model extracts features from the fused perspective view, while the decoder reconstructs these features into a top-down BEV representation. This step leverages the combined strengths of both sensor modalities, providing a detailed and accurate BEV that captures the spatial relationships and features of the environment.

The output of the fourth machine learning model is the second BEV. This BEV offers a comprehensive top-down view of the environment, integrating the visual and radar data to enhance situational awareness and target tracking. The second BEV provides additional context and detail that may not be fully captured by the first BEV alone.

The final step of the method disclosed herein may involve fusing the first BEV, obtained from the initial processing of camera and radar data, with the second BEV. This fusion process combines the information from both BEVs to create a final BEV that is more robust and accurate. Techniques such as weighted averaging, concatenation, or more advanced fusion methods using machine learning can be used to fuse or merge the two BEVs. The final BEV provides a comprehensive and reliable representation of the environment, making it particularly useful for applications like autonomous driving, robotics, and surveillance.

By incorporating these additional steps, the method enhances the overall quality and reliability of the BEV representation, ensuring that it accurately reflects the environment and supports effective decision-making in complex scenarios.

In embodiments, the method may further comprise performing at least one of object detection, semantic segmentation, and object tracking on the final BEV.

In embodiments, the camera images are at least one of front-view, back-view, side-view camera images.

Object detection may involve identifying and locating objects within the final BEV. This task may be typically performed using machine learning models, such as convolutional neural networks, which are trained to recognize various objects like vehicles, pedestrians, and obstacles. For example, in an autonomous driving application, object detection can help the vehicle identify other cars, cyclists, and road signs, enabling it to navigate safely and efficiently. Semantic segmentation refers to the process of classifying each pixel in the final BEV into predefined categories, such as road, sidewalk, vehicle, or pedestrian. This task provides a detailed understanding of the scene, allowing for precise navigation and decision-making. For instance, in a robotics application, semantic segmentation can help a robot distinguish between different types of surfaces and objects, ensuring it can move and interact with its environment appropriately.

Object tracking may involve monitoring the movement of detected objects over time within the final BEV. This task is useful for applications that require continuous awareness of dynamic environments, such as surveillance systems and autonomous vehicles. Object tracking algorithms, such as Kalman filters or deep learning-based trackers, can maintain the trajectories of moving objects, ensuring their positions are accurately updated in real-time. For example, in a security system, object tracking can help monitor the movement of individuals or vehicles within a monitored area, providing valuable information for threat detection and response.

In embodiments, the camera images used in the method disclosed herein can be from at least one perspective, including front-view, back-view, and side-view cameras. This diversity in camera angles ensures comprehensive coverage of the environment, capturing different aspects and details that may be missed by a single viewpoint. For instance, front-view cameras can provide a clear view of the road ahead, back-view cameras can monitor the area behind a vehicle, and side-view cameras can capture the surroundings on either side. By integrating data from multiple camera perspectives, the method can create a more complete and accurate representation of the environment, enhancing the effectiveness of the sensor fusion process.

Fig. 3 shows a schematic illustrating an embodiment of the system used for sensor fusion according to the invention.

As shown in Fig. 3, one embodiment of the proposed fusion architecture includes three fusions by concatenation points: 1) BEV Fusion: Radar Range-Azimuth (RA) view and Camera BEV view are fused. 2) Perspective Fusion: Front-view camera data and radar's point cloud data are fused. The result is then transformed to BEV via a Variational Autoencoder (VAE) as shown in Fig. 3. and 3) Final Fusion: The results from the above steps are again fused for final predictions.

Said sensor fusion method may be illustrated by the following example comprising three steps. In Step 1, the camera network learns the image transformation from front-view to BEV. Assuming we are given a set of (N) front-view (fv) camera input images with training sample pairs $\left({I}_{fv}^{i}, {I}_{bev}^{i}\right)$. The transformation is represented by the equation: ${\hat{I}}_{\left(fv\to bev\right)} = {\prod }_{fv}^{BEVPolar} \left({I}_{fv}^{n}\right)$ where Π denotes the variational encoder-decoder architecture that learns the transformation of front-view (or any other view) images to BEV polar domain and ${\left[{I}_{fv}^{n}∈{ℝ}^{HxWx 3}\right]}_{n = 1}^{N}$.

The radar signal processing pipeline processes the radar Range-Azimuth (RA) data from raw ADC signals. The radar's Analog-to-Digital (ADC) data is processed to obtain the RA image-like representation, as shown in the equation: $Ψ = {f}_{ADC}^{RA} \left({R}_{ADC}\right)$

This result is used in BEV, and the fused result is denoted as "x". It is noted that "x" is in BEV and represents the Range-Azimuth (RA) view. All the operators ° in the equations represent fusion by concatenation. $x = {\hat{I}}_{\left(fv\to bev\right)} ∘ Ψ$

In Step 2, another camera network is proposed to learn the features in front-view (e.g., perspective view). ${\hat{I}}_{\left(fv\to fv\right)} = {\prod }_{fv}^{fv} \left({I}_{fv}^{n}\right)$

Where Π denotes the encoder-decoder architecture that learns the camera image features in front-view (e.g., perspective view) and ${\left[{I}_{fv}^{n}∈{ℝ}^{HxWx 3}\right]}_{n = 1}^{N}$.

The idea is to project the point cloud data from radar to 2D front-view camera images as binary masks. To achieve this, point cloud data is first generated from raw ADC signals. The function that processes the raw ADC signal to point cloud (pc) data may be given by: $pc = {f}_{ADC}^{PC} \left({R}_{ADC}\right)$

Once projected and fused (e.g., thereby obtaining a fused perspective view), the resultant is then fed into another autoencoder camera network that learns the BEV transformation. This process is represented by the equation: ${\hat{I}}_{\left(fv\to bev\right)} = \prod \left({pc}^{∘}{\hat{I}}_{\left(fv\to fv\right)}\right)$ where Π denotes the variational encoder-decoder architecture that learns the transformation of front-view images to BEV polar domain.

In Step 3, the result obtained from Step 1 is fused with the result obtained from Step 2. This fusion is useful for subsequent tasks such as object detection or semantic segmentation, which are based on the available ground truth data. The final fusion process is represented by the equation: $z = {x}^{∘} {\hat{I}}_{\left(fv\to bev\right)}$

In summary, this embodiment invention involves three encoder-decoder architectures and three fusion points, providing a comprehensive and efficient framework for sensor fusion in automotive applications. This approach not only reduces computational complexity but also enhances the accuracy and reliability of the fused data, making it a viable solution for real-time automotive applications.

Fig. 3 illustrates one embodiment of the Camera-Radar fusion framework or system according to the invention.

ADC data 310, namely ADC0 to ADC3, are collected from the radar sensor and are processed to get complex ADC data with 4 chirps 315, wherein each chirp has 4 receiving antennas.Consequently, range FFT is performed to transform the data into the frequency domain 320, followed by doppler FFT to obtain the Range Doppler (RD) spectrum data 325 resulting in a size (512,256,16). This complex data is converted to a normal form 330 by concatenating real and imaginary parts, thereby obtaining the size (512,256,32).

Accordingly, Doppler FFT is performed on radar time (RT) data to obtain the complex RD spectrum data. This data is fed to the Constant False Alarm Rate (CFAR) module 335 to obtain point cloud (PC) data 340. This PC data is projected onto the camera images to obtain perspective view data. This perspective view data is fed into a Perspective Fusion node 375, which also receives input from a perspective view of the camera 360. Said perspective view is obtained by processing the camera images using an encoder-decoder architecture 370.

The output of the perspective fusion node 375 is fed into a Variational Autoencoder (VAR) 380 to produce a Bird's Eye View (BEV) fusion. Simultaneously, the output of the RD component 325 is fed into an RA (Range-Azimuth) component 345, where it undergoes Multiple-Input Multiple-Output (MIMO) calibration. The calibrated output is then processed by a Radar Neural Network (NN) 350 to produce a BEV.

The BEV view from the Radar NN is fed into a First BEV Fusion Component 355, which also receives input from the BEV learned using the VAR 365 connected to the camera 360. The BEV fusion output from the First BEV Fusion Component 355 is then fed into a second BEV Fusion Component 385, which also takes as input the output of the VAR 380. Finally, the third fusion component 385 generates the Final BEV Prediction 390 by combining the inputs from the previous steps.

This comprehensive system and sensor fusion ensures that the radar and camera data are effectively fused to produce accurate and reliable BEV predictions, enhancing the overall performance and accuracy of the system. The sensor fusion method and system disclosed herein can be implemented in different fields including automotive, robotics and aerospace. It can be implemented and tested not only on Radar, Lidar et al. (RADIal) dataset, but can also be applied to any other relevant dataset which is not covered in this disclosure. The compact and flexible approach is less time consuming as there are no physical calculations involved.

In the present disclosure, any feature described in an embodiment, example, method (e.g., method 100, 200), method step, and/or system (e.g., system 300), may be combined with any feature of another embodiment, example, method, method step, and/or system unless otherwise specified.

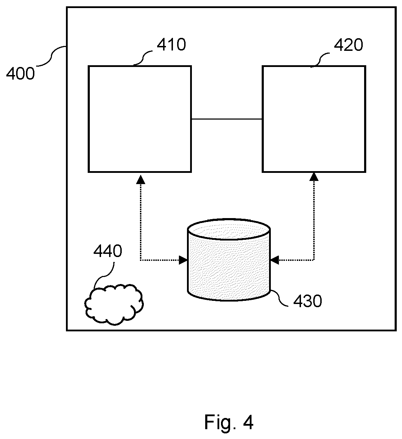

Fig. 4 schematically illustrates a block diagram of an embodiment of an apparatus 400 comprising one or more interfaces 410 for communication and one or more processors or data processing circuits 420 configured to execute any one of the methods described herein.

In embodiments, the apparatus may further comprise a memory or a storage medium 430. A storage medium 430 (or a data carrier, or a computer-readable data carrier, or a computer-readable medium) may comprise, stored thereon, a computer program or computer-executable instructions for performing one of the methods described herein when it is performed by one or more processors 420. The processors 420 may communicate with the storage medium 430 directly and/or via the one or more interfaces 410.

In embodiments, the one or more interfaces 410 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 420 may correspond to or comprise any type of programable hardware. So, examples of the data processing circuit 420, e.g., comprise a memory, microcontroller, field programmable gate arrays, one or more central and/or graphical processing units. To execute the proposed method, the data processing circuit 420 may be configured to access or retrieve an appropriate computer program for the execution of the proposed method from a memory of the data processing circuit 420 or a separate memory which is communicatively coupled to the data processing circuit 420.

Some or all of the method steps described above with regard to Figures 1-3 may be implemented by a computer in that they are executed by (or using) a processor, a microprocessor, an electronic circuit, or the data processing circuit 420. For example, the implementation can be performed using a non-transitory storage medium such as a computer-readable storage medium or data carrier. Such computer-readable media include any media that can be accessed by either a general purpose or a specialized computer system.

Furthermore, any component of apparatus 400 may be embedded locally on the autonomous system or located in the cloud 440. For instance, the data processing circuit (420) can be located in an edge device of the autonomous system, in the cloud 440 (e.g., a digital twin), or partially in both. Edge devices, equipped with edge AI capabilities, can perform real-time data processing and decision-making close to the source of data, reducing latency and improving response times. This is particularly helpful for autonomous systems that require immediate reactions to dynamic environments.

The cloud component 440 can leverage high-performance computing (HPC) resources and advanced machine learning models for more complex computations that are not time-sensitive. By utilizing cloud-based digital twins 440, which are virtual replicas of physical systems, the autonomous system can simulate various scenarios and optimize its performance based on real-time data and predictive analytics. This hybrid approach ensures that the system can handle both real-time processing and complex computations efficiently.

Additionally, the integration of 5G/6G technology (e.g., in communication interfaces 410) can further enhance this setup by providing high-speed, low-latency communication between the edge devices and the cloud 440. This ensures seamless data transfer and synchronization, enabling the autonomous system to make informed decisions quickly and accurately.

In summary, by combining edge AI, HPC, digital twins, and 5G/6G technology, the implementation of these methods becomes more robust, scalable, and efficient. This hybrid architecture not only enhances the performance and decision-making capabilities of the autonomous system but also ensures that it can adapt to various dynamic environments and scenarios effectively.

The apparatus 400 may also include a cloud implementation 440, which enhances its capabilities by leveraging cloud-based resources. This cloud implementation comprises several key components. The cloud implementation may comprise cloud interfaces 410' designed for communication between the local apparatus and the cloud. These interfaces enable data transfer, remote access, and integration with cloud services, ensuring seamless connectivity.

Additionally, the cloud implementation 440 may include cloud processors or data processing circuits 420'. These may be processing units located in the cloud, configured to execute any of the methods described for the apparatus. By utilizing cloud processors, the system can handle more complex computations and larger datasets without being limited by the local hardware's capabilities. This allows for greater flexibility and efficiency in processing tasks, as well as the ability to dynamically scale resources based on demand.

Furthermore, the cloud implementation 440 may include a cloud memory or storage medium 430' that may be responsible for storing data, datasets, and program/method code in the cloud. Cloud storage offers scalability, redundancy, and accessibility, ensuring that data is securely stored and can be accessed from anywhere. This enhances the overall reliability and availability of the system, providing robust data protection and disaster recovery options.

The cloud implementation 440 allows for flexibility in how the methods are executed. Specifically, any of the methods described herein can be partially executed in the cloud, where some parts of the method may be processed locally while others are offloaded to the cloud. This hybrid approach optimizes performance and resource utilization by balancing the load between local and cloud resources. Alternatively, the entire method can be fully executed in the cloud, leveraging the cloud's extensive computational power and storage capabilities. This dual implementation (local and cloud) ensures that the apparatus can efficiently handle a wide range of tasks, from simple local processing to complex cloud-based computations, providing a robust and scalable solution that can adapt to varying workloads and operational requirements.

## Claims

1. A method for sensor fusion, comprising:
- processing (110) camera images using a first machine learning model to obtain a camera Bird's Eye View, BEV;
- processing (120) radar data using a second machine learning model to obtain a radar BEV; and
- fusing (130) the camera BEV with the radar BEV to obtain a first BEV.

2. The method of claim 1, wherein processing the radar data to obtain a radar BEV comprises:
- generating a Range-Azimuth, RA, view from raw radar data; and
- transforming the RA view to the radar BEV using the second machine learning model.

3. The method of any previous claim, wherein the fusion of the camera BEV with the radar BEV to obtain the first BEV is performed by concatenation.

4. The method of any previous claim, further comprising performing at least one of object detection, object tracking, and semantic segmentation on the first BEV.

5. The method of any previous claim, further comprising:
- processing (140) the camera images using a third machine learning model to obtain a camera perspective view;
- processing (150) the radar data to obtain a radar perspective view; and
- fusing (160) the camera perspective view with the radar perspective view to obtain a fused perspective view.

6. The method of claim 5, wherein processing the radar data to generate a radar perspective view comprises:
- generating point cloud data from the radar data; and
- processing the point cloud data to obtain the radar perspective view.

7. The method of claim 6, wherein fusing the camera perspective view with the radar perspective view to obtain the fused perspective view comprises:
projecting the point cloud data onto 2D camera image features of the camera perspective view as binary masks, thereby ensuring that data from the camera and radar correspond to a same spatial location, wherein the binary mask is indicative of the locations in the camera image that correspond to the radar points, ensuring that data from both sensors align spatially.

8. The method of claim 7, wherein said projecting of the point cloud data onto 2D camera image features comprises:
- transforming the point cloud data into a camera's coordinate system to obtain transformed points;
- projecting the transformed points onto a 2D image plane of the camera using the camera's intrinsic parameters, thereby obtaining projected points; and
- overlaying the projected points as the binary masks to ensure spatial alignment.

9. The method of claim 8, wherein overlaying the projected points as binary masks to ensure spatial alignment comprises:
- creating a binary mask where each pixel corresponds to a specific location in the camera image, and
- setting the pixels at the projected coordinates to 1 and all other pixels to 0, thereby aligning the radar data with the camera data spatially.

10. The method of any one of claims 5-9, further comprising:
- processing (170) the fused perspective view using a fourth machine learning model to obtain a second BEV; and
- fusing (180) the first BEV with the second BEV to obtain a final BEV.

11. The method of claim 10, further comprising:
performing at least one of: object detection, object tracking, and semantic segmentation on the final BEV.

12. The method of any previous claim, wherein the camera images are at least one of front-view, back-view, side-view camera images.

13. A computer program comprising instructions which, when the computer program is executed by a computer, cause the computer to carry out a method of any one of claims 1 to 12.

14. A computer-readable data carrier having stored thereon the computer program of claim 13.

15. An apparatus (400) comprising:
one or more interfaces (410) for communication;
a memory (430); and
a data processing circuit (420) configured to carry out the method of any one of claims 1 to 12.
